# FASCICULE DE BREVET EUROPEEN

(11) **EP 1 241 373 B1**
(45) Date de publication et mention de la délivrance du brevet: **31.10.2007**
(21) Numéro de dépôt: 02290374.4
(22) Date de dépôt: 15.02.2002
(51) Int. Cl.: F16F 9/43, F16F 9/02

(54) **Ressort à gaz muni d'un organe de sécurité inviolable**
Gasfeder mit Sicherheitsvorrichtung und Originalitätsverschluss
Gas spring comprising a tamper-resistant safety device

(30) Priorité: 23.02.2001 FR 0102488; 17.07.2001 FR 0109528
(43) Date de publication de la demande: 18.09.2002
(73) Titulaire: Barnes Group Switzerland GmbH, 9053 Teufen (CH)
(72) Inventeur: Phelizot, Jacques, 55170 Ancerville (FR)
(74) Mandataire: Tanty, François

(56) Documents cités:
- EP-A- 0 959 263
- FR-A- 2 635 755
- US-A- 1 243 799

## Description

La présente invention a pour objet un dispositif à fluide compressible du type comportant une chambre de compression destinée à être remplie par un fluide compressible et un piston mobile dans cette chambre pour comprimer le fluide qui s'y trouve et générer un effet de rappel élastique.

L'invention concerne tout particulièrement le cas où le fluide compressible est un gaz tel que l'azote par exemple, le dispositif étant alors appelé ressort à gaz.

On connaît par la demande de brevet européen EP-A- 0 959 263 au nom de la demanderesse un ressort à gaz comportant un organe de sécurité agencé pour provoquer la purge de la chambre de compression en cas de surcourse du piston. Cet organe de sécurité se présente par exemple sous la forme d'un bouchon apte à être vissé dans un perçage du carter du dispositif. Ce bouchon peut comporter un corps creux fermé à une extrémité par un pion relié au corps du bouchon par une partie sécable, le pion étant disposé de manière à être expulsé par le piston en cas de surcourse de ce dernier. En variante, le bouchon peut être plein et être déplacé en entier en cas de surcourse du piston.

Le ressort à gaz peut comporter un élément de retenue du pion ou du bouchon, de manière à éviter que celui-ci ne soit projeté hors du carter du ressort en cas de surcourse du piston.

Cet élément de retenue peut être constitué par exemple par une plaque boulonnée sur le carter du ressort ou, notamment lorsque l'organe de sécurité est constitué par un bouchon plein qui est éjecté tout entier en cas de surcourse du piston, par une bague vissée sur le carter du ressort derrière le bouchon.

L'utilisation sur un ressort à gaz d'un organe de sécurité tel que précité a permis d'améliorer grandement la sécurité des ressorts à gaz en évitant l'éjection du piston en cas de rupture de la collerette d'extrémité de celui-ci suite à un choc avec le carter du ressort.

La présente invention vise notamment à améliorer encore la sécurité des ressorts à gaz.

L'invention a ainsi pour objet un dispositif à fluide compressible, tel qu'un ressort à gaz, comportant un carter définissant une chambre de compression et un piston mobile dans cette chambre, ainsi qu'un organe de sécurité disposé de manière à être percuté par le piston en cas de surcourse de ce dernier pour provoquer la purge de la chambre de compression, ce dispositif comportant en outre éventuellement un élément de retenue de l'organe de sécurité.

Le dispositif selon l'invention est défini par les caractéristiques de la revendication 1, 2 ou 3.

Grâce à l'invention, on évite qu'un opérateur ne puisse aisément démonter l'organe de sécurité alors que la chambre de compression est encore remplie de guide sous pression.

La sécurité du dispositif s'en trouve donc renforcée.

Selon un premier exemple de mise en oeuvre de l'invention, au moins l'un de l'organe de sécurité, de l'élément de retenue éventuel ou de l'élément de fixation éventuel comporte une zone sécable.

Cette zone sécable peut relier une première partie de la pièce en question, destinée à rester à demeure sur le dispositif au moins lors du fonctionnement normal de celui-ci, à une deuxième partie amovible, destinée à permettre la mise en place de la première partie sur le dispositif et à être séparée ensuite de celle-ci pour empêcher par la suite son démontage.

Dans une réalisation particulière, la zone sécable est réalisée d'un seul tenant avec l'organe de sécurité destiné à être percuté par le piston en cas de surcourse de ce dernier.

La zone sécable peut ainsi relier un bouchon vissé sur le carter du dispositif à une partie d'entraînement apte à coopérer avec une clé ou tout autre outil permettant de visser le bouchon sur le carter du dispositif, le bouchon étant dépourvu de relief pouvant coopérer avec cette clé ou cet outil de manière que, lorsque la partie d'entraînement a été séparée du bouchon, il n'est plus possible de démonter le bouchon en utilisant une clé ou un outil similaire à celui qui a été utilisé pour fixer le bouchon sur le dispositif.

Le bouchon peut, dans une réalisation particulière, comporter un corps creux avec en extrémité un pion sécable.

Avantageusement, le pion comporte une partie de retenue l'empêchant de passer à travers le corps creux et d'être expulsé hors du dispositif, cette partie de retenue pouvant être formée par au moins une extension radiale, par exemple un rebord annulaire situé à extrémité supérieure du pion. Les surfaces respectives du rebord annulaire et du corps creux destinées à venir en appui l'une contre l'autre en cas de rupture de la zone sécable sont avantageusement perpendiculaires à l'axe du bouchon, de manière à ne pas créer de zone d'étanchéité et permettre au fluide compressible contenu à l'intérieur du dispositif de s'écouler vers l'extérieur.

Le dispositif peut ainsi être dépourvu d'élément de retenue distinct de l'organe de sécurité.

Le bouchon comporte avantageusement un passage conformé de manière à faciliter l'écoulement du gaz vers l'extérieur, ayant par exemple une section s'élargissant vers l'extérieur.

En variante, le bouchon peut être plein et alors être éjecté en entier en cas de surcourse du piston, en raison de la résistance limitée des filetages coopérants du bouchon et du taraudage dans lequel celui-ci est vissé.

Dans une réalisation particulière, la zone sécable peut être réalisée d'un seul tenant avec un élément distinct de l'organe de sécurité, cet élément étant de préférence un élément de retenue de l'organe de sécurité.

Cet élément de retenue peut servir, lorsque l'organe de sécurité se présente sous la forme d'un bouchon creux comportant un pion en extrémité apte à être éjecté en cas de surcourse du piston, à retenir ce pion et éviter son expulsion hors du dispositif.

L'élément de retenue peut également servir, lorsque l'organe de sécurité est constitué par un bouchon plein, à retenir le bouchon dans le dispositif en cas de surcourse du piston.

L'élément de retenue peut se présenter par exemple sous la forme d'une bague ou d'une vis creuse vissée dans un taraudage réalisé dans le carter du dispositif, en arrière de l'organe de sécurité.

La zone sécable peut relier une première partie de l'élément de retenue, destinée à rester à demeure sur le dispositif après son montage, à une partie d'entraînement amovible, utilisée lors du montage de la première partie dans le dispositif.

Lorsque l'élément de retenue n'est pas fixé directement sur le dispositif mais est maintenu sur celui-ci par un ou plusieurs éléments de fixation, la zone sécable peut encore être réalisée d'un seul tenant avec l'un au moins de ces éléments de fixation.

En particulier, lorsque l'élément de retenue est constitué par une plaque rapportée sur le carter du dispositif de manière à interdire l'accès à l'organe de sécurité, la zone sécable peut être réalisée d'un seul tenant avec l'un au moins des éléments de fixation utilisés pour maintenir cette plaque en place contre le carter.

D'une manière générale, il est préférable que la zone sécable se situe en retrait de l'ouverture d'un logement du carter du dispositif ou d'un élément de retenue éventuel rapporté sur celui-ci, de manière à empêcher, après rupture de cette partie sécable, un opérateur de venir en prise avec une pince sur la pièce en question afin de l'entraîner en rotation et de la dévisser.

La partie d'entraînement qui est reliée par la zone sécable au reste de l'organe de sécurité ou de l'élément de retenue ou de fixation éventuel comporte avantageusement un logement présentant une section transversale hexagonale, adaptée à coopérer avec une clé Allen.

La zone sécable peut être constituée par exemple par une portion annulaire amincie, d'épaisseur constante ou décroissante en direction de la partie amovible ou de la partie destinée à rester à demeure sur le dispositif.

Dans un autre exemple de mise en oeuvre de l'invention, l'un au moins de l'organe de sécurité, de l'élément de retenue éventuel ou de l'élément de fixation éventuel de l'organe de retenue comporte non pas une zone sécable mais une zone déformable.

En particulier, l'organe de sécurité ou l'élément de retenue peut comporter une partie d'entraînement agencée pour coopérer avec une clé Allen ou tout autre outil utilisé lors du montage de l'organe de sécurité ou de l'élément de retenue sur le dispositif et un logement pouvant recevoir un insert apte à interdire l'accès à ladite partie d'entraînement, cet insert pouvant être fixé de manière inamovible sur l'organe de sécurité ou l'élément de retenue.

La fixation inamovible de l'insert peut être obtenue par exemple, lorsque l'insert est vissé dans l'organe de sécurité ou l'élément de retenue, par déformation de l'un au moins des filets coopérants de l'insert d'une part, et de l'organe de sécurité ou de l'organe de retenue d'autre part.

En particulier, l'insert peut se présenter sous la forme d'une bague, filetée sur une partie seulement de sa longueur, et le logement précité peut être taraudé sur une partie seulement de sa longueur, la longueur de la partie filetée de l'insert étant supérieure à la longueur de la partie non taraudée du logement, de manière qu'en fin de vissage, la rotation de l'insert provoque le foirage de l'un au moins des filets de l'insert et de la partie taraudée du logement, foirage qui rend impossible par la suite l'engagement correct du filet de l'insert dans la partie taraudée du logement et donc le démontage de l'insert, la partie non filetée de l'insert restant engagée dans la partie taraudée du logement.

Dans une réalisation particulière, le matériau dans lequel l'insert est réalisé présente une moindre ductilité que le matériau dans lequel est réalisé l'organe de sécurité ou l'élément de retenue, de sorte que c'est la partie taraudée de l'organe de sécurité ou de l'élément de retenue qui est déformée lorsque l'insert est entraîné en rotation au terme de son vissage dans le logement correspondant.

De préférence, la partie non filetée de l'insert présente un diamètre extérieur qui correspond au diamètre intérieur de la partie taraudée du logement, de sorte que l'insert est maintenu sans jeu radial sensible dans le logement correspondant.

Le frottement de l'insert dans le logement de l'organe de sécurité ou de l'élément de retenue est insuffisant pour permettre à l'opérateur, en faisant tourner l'insert, d'entraîner en rotation l'organe de sécurité ou l'élément de retenue, afin de procéder au démontage de celui-ci, au moins tant que l'organe de sécurité n'a pas été percuté par le piston en cas de surcourse de ce dernier.

L'insert peut se présenter sous la forme d'une bague filetée extérieurement sur une partie seulement de sa longueur, ayant une section transversale intérieure hexagonale, suffisamment petite pour empêcher l'accès à la partie d'entraînement de l'organe de sécurité ou de l'élément de retenue.

Dans une réalisation particulière de l'invention, l'insert est agencé pour qu'en cas de surcourse du piston entraînant la purge de la chambre de compression et la déformation de l'organe de sécurité, le frottement de l'insert dans le logement correspondant de l'organe de sécurité ou de l'élément de retenue devienne suffisant pour qu'en tournant l'insert, on puisse procéder au dévissage de l'organe de sécurité ou de l'élément de retenue.

Dans une réalisation particulière, l'organe de sécurité étant constitué par un bouchon à corps creux, fermé à une extrémité par un pion sécable et comportant à l'autre extrémité un logement pouvant recevoir un insert tel que défini plus haut, ce dernier est avantageusement réalisé de manière à ce que le pion, après séparation du corps du bouchon, puisse en percutant l'insert provoquer une déformation de celui-ci suffisante pour modifier la manière dont il coopère avec le logement de l'organe de sécurité et permettre le démontage de l'ensemble.

En particulier, le pion peut en s'encastrant partiellement dans l'insert provoquer une expansion radiale de celui-ci ayant pour conséquence d'augmenter le coefficient de frottement entre l'insert et l'organe de sécurité.

Dans cet exemple de réalisation, la partie d'entraînement utilisée pour visser le bouchon sur le carter du dispositif est réalisée en retrait du logement recevant l'insert et présente par exemple une section transversale intérieure hexagonale, de dimensions supérieures à celles de la section transversale intérieure de l'insert.

L'insert peut être utilisé dans cette variante de réalisation, à la fois comme moyen pour rendre indémontable l'organe de sécurité et comme moyen pour retenir le pion du bouchon après expulsion de celui-ci, en cas de surcourse du piston, l'organe de sécurité devenant en outre aisément démontable en cas de purge de la chambre de compression suite à une surcourse du piston, ce qui constitue un avantage supplémentaire.

L'invention a encore pour objet un organe de sécurité destiné à être fixé sur le carter d'un dispositif à fluide compressible tel qu'un ressort à gaz pour être percuté par le piston en cas de surcourse de ce dernier, comportant une partie d'entraînement reliée par une zone sécable au reste de l'organe de sécurité.

L'invention a encore pour objet un ensemble constitué d'un organe de sécurité destiné à être fixé sur le carter d'un dispositif à fluide compressible tel qu'un ressort à gaz, pour être percuté par le piston en cas de surcourse de ce dernier, et d'un insert destiné à être fixé à l'intérieur de cet organe de sécurité pour rendre ce dernier indémontable, à tout le moins pendant le fonctionnement normal du ressort.

L'invention a encore pour objet un élément de retenue destiné à être fixé sur le carter d'un dispositif à fluide compressible tel qu'un ressort à gaz pour retenir un organe de sécurité destiné à être percuté par le piston en cas de surcourse de ce dernier, pourvu d'une partie d'entraînement reliée par une zone sécable au reste de l'élément de retenue.

L'invention a encore pour objet un procédé de fabrication d'un dispositif à fluide compressible tel qu'un ressort à gaz, du type comportant une chambre de compression et un piston mobile dans cette chambre, ainsi qu'un organe de sécurité disposé de manière à être percuté par le piston en cas de surcourse de ce dernier, afin de purger la chambre de compression, ce procédé étant caractérisé par le fait qu'il comporte les étapes suivantes :
i) l'organe de sécurité comportant une partie d'entraînement sécable, visser l'organe de sécurité sur le dispositif en l'entraînant en rotation au moyen d'un outil tel qu'une clé Allen coopérant avec la partie d'entraînement sécable, puis, au terme du vissage, poursuivre la rotation pour provoquer la rupture de la partie d'entraînement sécable, ou
ii) l'organe de sécurité étant pourvu d'un logement pouvant recevoir un insert et, en retrait de ce logement, d'une partie d'entraînement pouvant coopérer avec un outil tel qu'une clé Allen, visser l'organe de sécurité dans le dispositif, puis au terme du vissage de l'organe de sécurité, visser l'insert dans ledit logement et au terme du vissage de l'insert forcer le mouvement de rotation de l'insert de manière à provoquer le foirage des filets coopérants de l'insert et de l'organe de sécurité, ou
iii) mettre en place l'organe de sécurité sur le dispositif puis fixer sur le dispositif un élément de retenue, cet élément de retenue comportant une partie d'entraînement reliée au reste de l'élément de retenue par une zone sécable, puis au terme du vissage de l'élément de retenue, poursuivre la rotation de manière à provoquer la rupture de la zone sécable et la séparation de la partie d'entraînement, ou
iv) fixer l'organe de sécurité sur le dispositif, placer un élément de retenue sur le dispositif, fixer l'élément de retenue sur le dispositif au moyen d'au moins un élément de fixation comportant une partie d'entraînement reliée au reste de l'élément de fixation par une zone sécable, visser l'élément de fixation sur le dispositif, puis, au terme du vissage, forcer la rotation de manière à provoquer la rupture de la zone sécable et le .. séparation de la partie d'entraînement, ou
v) fixer l'organe de sécurité sur le dispositif, altérer la forme, avec ou sans enlèvement de matière, de l'organe de sécurité de manière à le rendre indémontable, de préférence en détruisant des reliefs ayant servi au montage, ou
vi) fixer l'organe de sécurité sur le dispositif, fixer un élément de retenue de l'organe de sécurité sur le dispositif et altérer la forme, avec ou sans enlèvement de matière, de l'organe de sécurité de manière à rendre l'élément de retenue indémontable sans lui faire perdre sa fonction de retenue de l'organe de sécurité, ou
vii) fixer l'organe de sécurité sur le dispositif, fixer au moyen d'au moins un élément de fixation un élément de retenue de l'organe de sécurité sur le dispositif et altérer la forme, avec ou sans enlèvement de matière, de l'élément de fixation de manière à le rendre indémontable.

L'invention sera mieux comprise à la lecture de la description détaillée qui va suivre, d'exemples de réalisation non limitatifs, et à l'examen du dessin annexé, sur lequel :
- la figure 1 représente schématiquement, en coupe axiale, un ressort à gaz conforme à l'invention, après vissage du bouchon de sécurité dans le perçage du ressort à gaz et avant détachement de la partie d'entraînement amovible du bouchon,
- les figures 2 et 3 sont deux vues schématiques et partielles, en coupe axiale, du ressort à gaz après montage définitif de l'organe de sécurité, le piston étant représenté respectivement en fin de course nominale et en butée dans le fond de la chambre de compression,
- la figure 4 représente isolément, de manière schématique et partielle, en coupe axiale, l'organe de sécurité de la figure 1 avant sa mise en place sur le ressort à gaz,
- la figure 5 représente schématiquement et partiellement, en coupe axiale, une variante de réalisation de l'organe de sécurité de la figure 4,
- la figure 6 est une vue analogue à la figure 3, le ressort à gaz étant équipé d'une plaque de retenue boulonnée,
- la figure 7 représente schématiquement et partiellement, en coupe axiale, un deuxième exemple de réalisation de l'organe de sécurité,
- la figure 8 représente schématiquement et partiellement, en coupe, l'insert destiné à être introduit dans l'organe de sécurité de la figure 7,
- la figure 9 représente schématiquement et partiellement, en coupe axiale, l'organe de sécurité de la figure 7 équipé de l'insert de la figure 8,
- la figure 10 représente, schématiquement et partiellement, en coupe axiale, l'organe de sécurité de la figure 9, le pion du bouchon étant encastré dans l'insert,
- la figure 11 représente schématiquement et partiellement le ressort à gaz équipé d'un organe de sécurité selon un troisième exemple de réalisation de l'invention, et d'un élément de retenue,
- la figure 12 représente schématiquement et partiellement, en coupe axiale, un organe de sécurité conforme à un quatrième exemple de réalisation de l'invention,
- la figure 13 représente schématiquement l'organe de sécurité de la figure 12, la partie d'entraînement étant séparée du bouchon et la zone sécable reliant le pion au bouchon étant rompue.

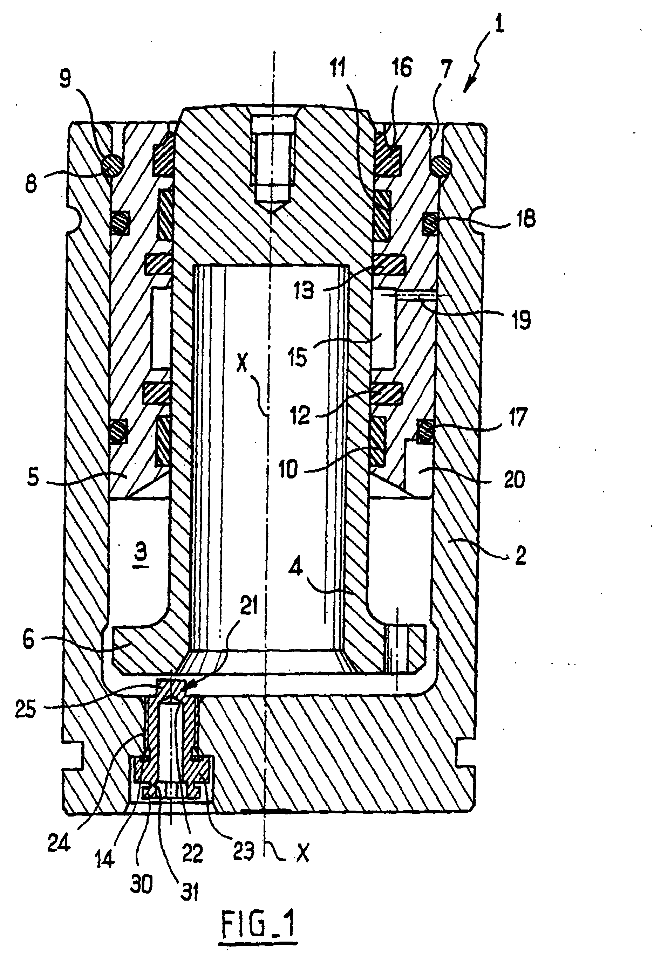

Le ressort à gaz 1 représenté sur les figures 1 à 3 comporte un carter métallique 2 en forme de cylindre creux, fermé à son extrémité inférieure et ouvert à son extrémité supérieure, définissant une chambre de compression 3 à intérieur de laquelle est mobile un piston monobloc 4, métallique.

Ce dernier comporte une tige, d'axe longitudinal X, coulissant dans un alésage réalisé dans une pièce de guidage 5 introduite dans l'ouverture du carter 2.

La tige du piston 4 présente à son extrémité inférieure une collerette 6 qui, au repos, vient buter contre la pièce de guidage 5 pour retenir le piston 4 dans le ressort à gaz.

La pièce de guidage 5 est retenue dans le carter 2 par un jonc métallique annulaire 8, lequel vient en appui, d'une part, dans un retrait annulaire 7 de la pièce de guidage 5 et, d'autre part, dans une gorge annulaire 9 réalisée à proximité de l'extrémité supérieure du carter 2.

Des segments de guidage 10 et 11 et des éléments d'étanchéité successifs 12 et 13 sont de façon connue en soi logés dans la pièce de guidage et s'appliquent sur la tige du piston 4.

Les éléments d'étanchéité 12 et 13 peuvent être constitués par exemple par des joints composites et délimitent entre eux une chambre annulaire 15 de lubrification, remplie d'un lubrifiant.

Un joint racleur 16 est présent à la partie supérieure de la pièce de guidage 5.

Deux joints toriques 17 et 18 s'interposent de façon étanche entre la pièce de guidage 5 et le carter 2.

Un évidement axial 20, dont la profondeur est supérieure à celle de la gorge logeant le joint 17 adjacent à la chambre de compression 3, permet à ce dernier de se déformer lorsque la pression existant dans le jeu de montage entre la pièce de guidage 5 et le carter 2, entre les joints 17 et 18, est supérieure à la pression régnant dans la chambre de compression.

Un perçage radial 19 débouchant à une extrémité dans la chambre de lubrification 15 et à l'autre extrémité à la périphérie de la pièce de guidage entre les joints 17 et 18, permet à la fin de l'utilisation du ressort et lorsque la chambre de compression est vidée, de réaliser une purge automatique de la chambre de lubrification 15, grâce au fait que le joint torique 17 cesse d'être étanche lorsqu'il s'engage dans l'évidement axial 20 précité.

Le ressort peut comporter une valve de remplissage non représentée.

Un organe de sécurité 21 est disposé dans un logement traversant le fond du carter 2 de manière à être percuté par le piston 4 en cas de surcourse, c'est-à-dire lorsque la course de ce dernier excède d'une valeur prédéterminée sa course nominale.

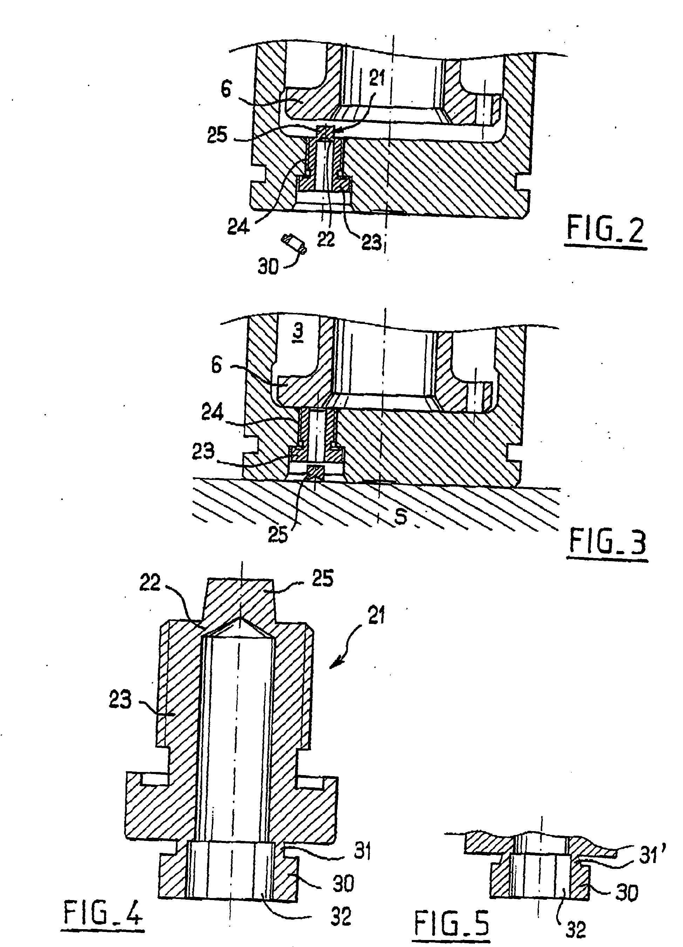

Comme on peut le voir sur la figure 4 notamment, l'organe de sécurité 21 comporte à sa partie supérieure un pion central 25 relié par une portion annulaire amincie 22 à un bouchon creux 23, apte à être vissé dans un taraudage 24 du carter 2.

Une rondelle d'étanchéité 14 est montée sur le bouchon 23 et s'applique contre le carter 2.

La résistance mécanique de la portion annulaire amincie 22 est choisie de telle sorte que cette dernière rompe lorsque le pion 25 est percuté par le piston 4.

Dans l'exemple décrit, lorsque l'organe de sécurité 21 est mis en place sur le carter 2, le pion 25 fait saillie de 3 mm dans le fond de la chambre de compression.

L'organe de sécurité 21 comporte également une partie inférieure amovible ou partie d'entraînement 30, reliée au bouchon 23 par une portion annulaire amincie 31.

La partie d'entraînement 30 présente une lumière traversante 32 de section transversale intérieure hexagonale, destinée à coopérer avec une clé Allen, non représentée, pour permettre à un opérateur de visser l'organe de sécurité 21 dans le taraudage 24 du carter 2.

La portion annulaire amincie 31 peut présenter une épaisseur constante.

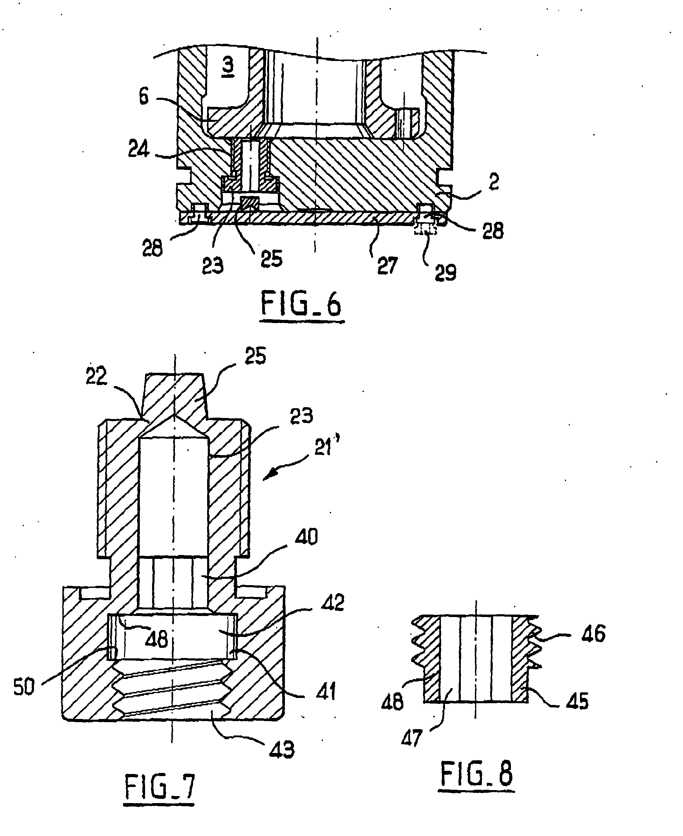

En variante, comme illustré à la figure 5, la partie d'entraînement 30 peut être reliée au bouchon 23 par une portion tronconique 31'.

La mise en place de l'organe de sécurité 21 sur le carter 2 s'effectue de la manière suivante.

L'opérateur commence par visser l'organe de sécurité 21 dans le taraudage 24 du carter 2, à l'aide d'une clé Allen introduite dans la partie d'entraînement 30.

Lorsque l'organe de sécurité 21 arrive en fin de course de vissage contre le carter 2, comme illustré à la figure 1, l'opérateur poursuit le mouvement de rotation de la clé Allen de manière à rompre la portion annulaire amincie 31, et séparer la partie d'entraînement 30 du bouchon 23, comme illustré sur la figure 2, rendant impossible le démontage ultérieur de l'organe de sécurité 21, le bouchon 23 étant dépourvu intérieurement de reliefs capables de coopérer avec une clé.

La portion annulaire amincie 31 se situant en retrait de la surface extérieure du fond du carter, il n'est pas possible pour un opérateur de dévisser le bouchon en utilisant une pince.

Lors du fonctionnement du ressort à gaz, en cas de surcourse du piston 4, comme représenté sur la figure 3, la collerette 6 percute le pion 25 et le repousse à l'intérieur du bouchon 23, après rupture de la portion annulaire amincie 22.

Le pion 25 se trouve alors expulsé au travers du bouchon creux 23 et la chambre de compression 3 peut se vider.

On évite ainsi, en cas de rupture de la collerette 6 sous l'effet de la fatigue du métal, qu'il règne une pression suffisante dans la chambre de compression 3 pour expulser la tige du piston 4.

Dans l'exemple de la figure 3, le ressort repose sur un bâti S de sorte que le pion 25 se trouve projeté contre celui-ci.

En variante, comme illustré à la figure 6, on fixe sur le fond du carter 2 une plaque 27 formant un écran vis-à-vis de la projection du pion 25.

Si la plaque 27 est fixée de manière amovible sur le carter 2, l'organe de sécurité 21 est agencé de manière à être indémontable.

La plaque 27 peut encore être fixée de manière inamovible sur le carter 2, ce qui permet d'utiliser un organe de sécurité fixé de manière amovible sur le carter, le cas échéant.

Pour fixer la plaque 27 de manière inamovible sur le carter 2, on peut utiliser par exemple des boulons 28 comportant chacun une partie amovible 29 qui, à l'instar de la partie d'entraînement 30 de l'organe de sécurité 21, sert au vissage et peut être séparée de manière à empêcher le démontage.

De préférence, l'épaisseur de la plaque 27 est suffisante pour que chaque boulon 28 n'offre aucune prise à une pince après séparation de la partie d'entraînement 29.

On a représenté sur la figure 7 un organe de sécurité 21' comportant un pion 25 relié à un bouchon creux 23 par une portion annulaire amincie 22, à l'instar de l'organe de sécurité 21 précédemment décrit.

L'organe de sécurité 21' comporte en outre une partie d'entraînement 40 présentant une section transversale hexagonale, destinée à recevoir une clé Allen, non représentée, permettant à un opérateur de le visser dans le taraudage 24 du carter 2.

La partie d'entraînement 40 est prolongée vers le bas par un logement 41 comportant une partie supérieure 42 cylindrique de révolution et une partie inférieure taraudée 43.

Le logement 41 est destiné à recevoir un insert 45, représenté isolément à la figure 8, se présentant sous la forme d'une bague filetée extérieurement sur une partie seulement de sa longueur, et dont la lumière centrale 47 présente une section transversale hexagonale destinée à coopérer avec une clé Allen, non représentée, permettant à un opérateur de visser l'insert 45 dans la partie inférieure taraudée 43.

Le filetage 46 de l'insert 45 s'étend sur la moitié supérieure environ de la hauteur de l'insert, dans l'exemple décrit.

La section intérieure de la lumière centrale 47 de l'insert 45 est inférieure à celle de la partie d'entraînement 40, de sorte que lorsque l'insert 45 est en place, il empêche d'accéder à la partie d'entraînement 40.

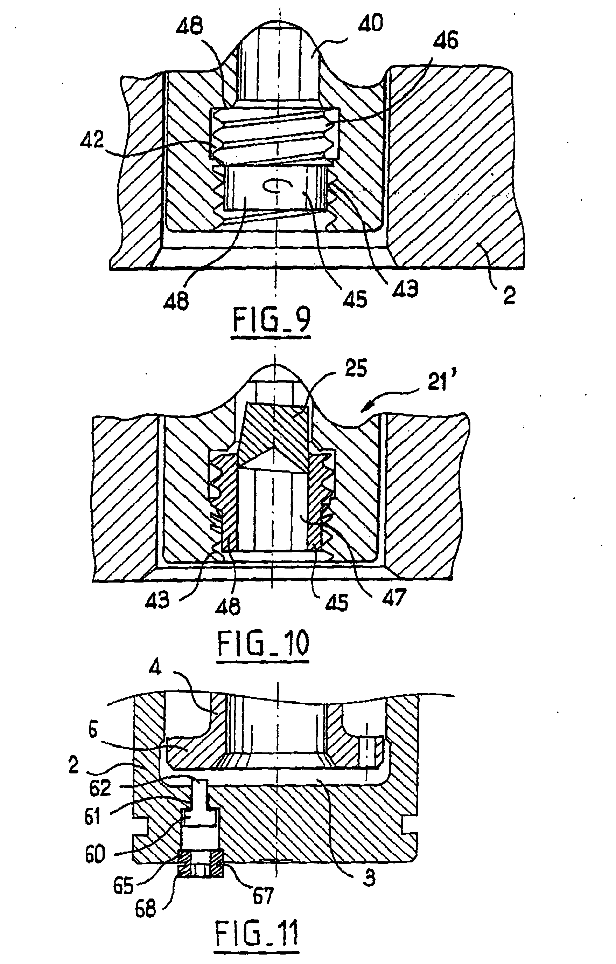

Pour mettre en place l'insert 45 dans l'organe de sécurité 21', ce dernier étant préalablement vissé dans le taraudage 24 du carter 2, l'opérateur visse l'insert 45 dans la partie taraudée 43 jusqu'à ce qu'il vienne en butée contre la paroi 48 délimitant supérieurement le logement 41, comme on peut le voir sur la figure 9.

La longueur du filetage 46 est supérieure à la hauteur de la partie supérieure 42 non taraudée du logement 41 de sorte qu'en fin de vissage de l'insert 45 dans le logement 41, le filetage 46 est toujours en prise avec le taraudage 43.

Le matériau dans lequel est réalisé l'organe de sécurité 21' présente, dans l'exemple décrit, une résistance mécanique inférieure à celle de l'insert 45.

Ainsi, l'opérateur peut provoquer par un mouvement de rotation supplémentaire de l'insert 45, une déformation du filet 50 à l'extrémité supérieure du taraudage 43, de manière à rendre fou l'insert 45 dans l'organe de sécurité 21'.

L'insert 45 ne peut plus être dévissé, car le frottement avec l'organe de sécurité est insuffisant pour qu'une rotation de l'insert 45 s'accompagne d'une rotation du bouchon 23.

La section transversale de la lumière centrale 47 étant plus réduite que celle de la partie d'entraînement 40, l'accès au bouchon 23 d'une clé six pans adaptée à la partie d'entraînement 40 est rendu impossible après la mise en place de l'insert 45 dans l'organe de sécurité 21'.

Ainsi, il est impossible de démonter l'organe de sécurité 21' du carter 2 lors du fonctionnement normal du ressort à gaz, c'est-à-dire tant que le pion 25 n'a pas été percuté par le piston 4.

La partie inférieure cylindrique de révolution 48, non filetée, de l'insert 45 présente un diamètre choisi de manière à centrer l'insert 45 dans le taraudage 43.

Lorsque le piston 4 percute le pion 25, celui-ci est séparé du bouchon 23 et projeté dans la lumière centrale 47.

L'insert 45 recule dans la partie taraudée 43 sous l'effet du choc sur une certaine distance, comme on peut le voir sur la figure 10.

Le pion 21, en venant se loger dans la lumière centrale 47, provoque une certaine expansion radiale de l'insert 45 ce qui entraîne son blocage en rotation dans la partie taraudée 43.

Il est alors possible de dévisser l'organe de sécurité 21' en utilisant une clé Allen adaptée à la taille de la lumière centrale de l'insert 45.

La chambre de compression 3 étant purgée après expulsion du pion 25, ce dévissage ne présente aucun danger pour l'opérateur.

L'invention permet d'éviter que l'utilisateur du ressort à gaz ne procède lui-même au remplacement de l'organe de sécurité, lorsque ce dernier est commercialisé sous contrôle du fabricant du ressort.

On a représenté sur la figure 11 un organe de sécurité 60 se présentant sous la forme d'un bouchon plein, vissé dans un taraudage 61 du carter 2 du ressort.

L'extrémité supérieure 62 de ce bouchon fait saillie dans le fond de la chambre de compression 3, de sorte qu'en cas de surcourse du piston 4, le bouchon 60 est expulsé par la collerette 6, après déformation des filets coopérants du bouchon 60 et du taraudage 61.

Pour éviter que le bouchon 60 ne soit projeté hors du carter 2, une bague de retenue 65 est vissée dans le logement recevant le bouchon 60, en arrière de celui-ci.

La section intérieure de la bague 65 est cylindrique de révolution.

La bague 65 est reliée par une portion annulaire amincie 67 à une partie d'entraînement amovible 68, dont la section intérieure est hexagonale, de manière à pouvoir coopérer avec une clé Allen.

Après mise en place du bouchon 60, la bague de retenue 65 est vissée, puis le mouvement de rotation est poursuivi pour rompre la portion annulaire amincie 67, la bague de retenue 65 devenant alors indémontable.

Dans une autre variante non illustrée, le bouchon plein 60 est remplacé par un bouchon creux fermé à son extrémité supérieure par un pion, à l'instar des modes de réalisation précédemment décrits, et la bague de retenue présente une lumière centrale dont la taille est adaptée non seulement à interdire l'accès au bouchon mais également à retenir le pion.

On ne sort pas du cadre de la présente invention en détruisant des reliefs de l'organe de sécurité ayant servi au montage, avec ou sans enlèvement de matière, de manière à rendre celui-ci indémontable.

On peut notamment visser dans le taraudage du carter un organe de sécurité présentant une section intérieure hexagonale puis introduire la mèche d'une perceuse dans l'organe de sécurité de manière à rendre la section intérieure circulaire et faire en sorte que la clé Allen ayant servi au montage ne puisse avoir de prise sur l'organe de sécurité.

On ne sort pas du cadre de la présente invention lorsque l'organe de sécurité réalise lui-même la fonction de retenue du pion en cas de rupture de la zone sécable.

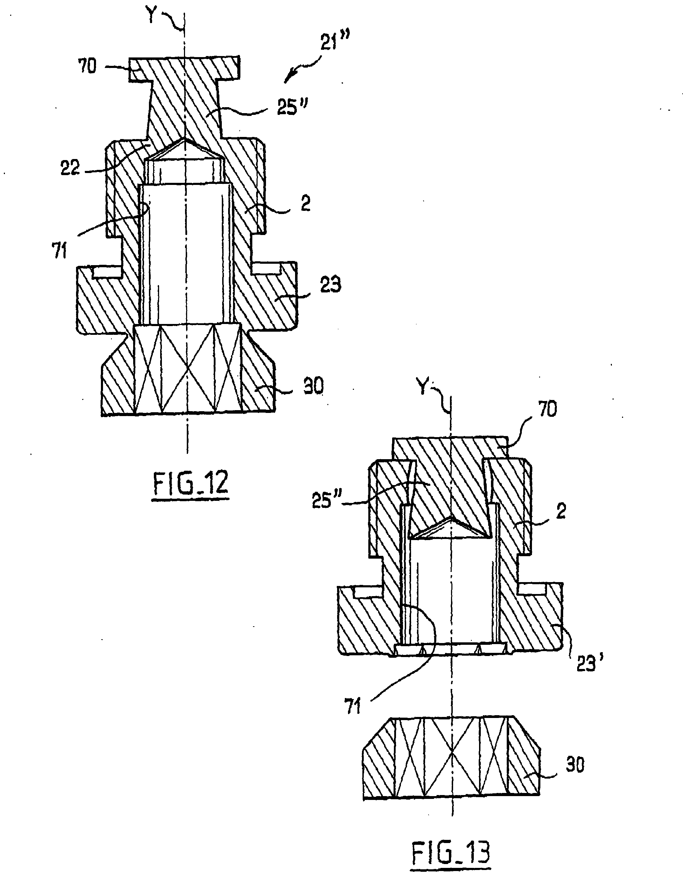

On a représenté sur la figure 12 un organe de sécurité 21" se différenciant de l'organe de sécurité 21 essentiellement par le fait que le pion 25" comporte à son extrémité supérieure un rebord annulaire 70 dont la section transversale présente un diamètre extérieur supérieur à celui de sa base se raccordant à la zone sécable.

L'organe de sécurité 21" est mis en place sur le carter du ressort à gaz de la même manière que l'organe de sécurité 21, c'est-à-dire en le vissant dans le taraudage 24 du carter et en séparant la partie d'entraînement 30 du bouchon 23.

Lors du fonctionnement du ressort à gaz, en cas de surcourse du piston, le pion 25" s'engage dans le bouchon 23 après rupture de la portion annulaire amincie 22.

Au lieu d'être expulsé à travers le bouchon 23, comme cela est le cas pour l'organe de sécurité 21, le pion 25" est retenu à l'intérieur du ressort à gaz par appui du rebord annulaire 70 contre l'extrémité supérieure du bouchon 23, comme cela est illustré à la figure 13.

Par ailleurs, les surfaces respectives du rebord annulaire 70 et du bouchon 23 venant en appui sont, par exemple, planes et perpendiculaires à l'axe Y du bouchon, de sorte que le contact ne soit pas étanche et que le gaz à l'intérieur du ressort puisse s'écouler vers l'extérieur et la chambre de compression être purgée.

La paroi intérieure 71 du bouchon 23 présente, dans l'exemple décrit, une forme étagée favorisant l'écoulement du gaz vers l'extérieur.

Dans les exemples qui viennent d'être décrits, organe de sécurité est mis en place sur le carter depuis l'extérieur de celui-ci.

On ne sort pas du cadre de la présente invention en mettant en place l'organe de sécurité sur le carter depuis l'intérieur de celui-ci.

## Revendications

1. Dispositif à fluide compressible, tel qu'un ressort à gaz (1 ; 80), comportant un carter (2 ; 81) définissant une chambre de compression (3 ; 82) et un piston (4 ; 83) mobile dans cette chambre, ainsi qu'un organe de sécurité (21 ; 21' ; 21" ; 60) disposé de manière à être percuté par le piston en cas de surcourse de ce dernier pour provoquer la purge de la chambre de compression, l'organe de sécurité étant agencé de manière à être monté sur le carter depuis l'extérieur de celui-ci, ledit dispositif étant **caractérisé par le fait que** :
l'organe de sécurité (21 ; 21' ; 21") comporte au moins une zone sécable (31 ; 31') ou déformable (50) apte à être rompue ou déformée lors du montage afin de rendre par la suite l'organe de sécurité inaccessible ou indémontable, au moins tant qu'il n'a pas été percuté par le piston et la chambre de compression purgée du fluide compressible.

2. Dispositif à fluide compressible, tel qu'un ressort à gaz (1 ; 80), comportant un carter (2 ; 81) définissant une chambre de compression (3 ; 82) et un piston (4 : 83) mobile dans cette chambre, ainsi qu'un organe de sécurité (21 ; 21' ; 21" ; 60) disposé de manière à être percuté par le piston en cas de surcourse de ce dernier pour provoquer la purge de la chambre de compression, l'organe de sécurité étant agencé de manière à être monté sur le carter depuis l'extérieur de celui-ci, ce dispositif comportant un élément de retenue (27 ; 65) de l'organe de sécurité ledit dispositif étant **caractérisé par le fait que**:
l'élément de retenue (27 : 65) comporte au moins une zone sécable (67) ou déformable (50) apte à être rompue ou déformée lors du montage afin de rendre par la suite l'organe de sécurité inaccessible ou indémontable, au moins tant qu'il n'a pas été percuté par le piston et la chambre de compression purgée du fluide compressible.

3. Dispositif à fluide compressible, tel qu'un ressort à gaz (1 ; 80), comportant un carter (2 ; 81) définissant une chambre de compression (3 ; 82) et un piston (4 ; 83) mobile dans cette chambre, ainsi qu'un organe de sécurité (21 ; 21' ; 21" ; 60) disposé de manière à être percuté par le piston en cas de surcourse de ce dernier pour provoquer la purge de la chambre de compression, l'organe de sécurité étant agencé de manière à être monté sur le carter depuis l'extérieur de celui-ci, ce dispositif comportant un élément de retenue (27 ; 65) de l'organe de sécurité, ledit dispositif étant **caractérisé par le fait que** :
l'élément de fixation (28) de l'élément de retenue sur le dispositif comporte au moins une zone sécable ou déformable (50) apte à être rompue ou déformée lors du montage afin de rendre par la suite l'organe de sécurité inaccessible ou indémontable, au moins tant qu'il n'a pas été percuté par le piston et la chambre de compression purgée du fluide compressible.

4. Dispositif selon l'une quelconque des revendications précédentes, **caractérisé par le fait qu'**au moins l'un de l'organe de sécurité (21 ; 21"), de l'élément de retenue (65) éventuel ou de l'élément de fixation (28) éventuel comporte une zone sécable (31 ; 31' ; 67).

5. Dispositif selon la revendication précédente, **caractérisé par le fait que** ladite zone sécable (31 ; 31' ; 67) relie une première partie (23 ; 65) destinée à rester à demeure sur le dispositif au moins lors du fonctionnement normal de celui-ci, à une deuxième partie amovible (30 ; 68), destinée à permettre la mise en place de la première partie sur le dispositif et à être séparée ensuite de celle-ci pour empêcher par la suite son démontage.

6. Dispositif selon l'une des deux revendications immédiatement précédentes, **caractérisé par le fait que** ladite zone sécable (31 ; 31') est réalisée d'un seul tenant avec l'organe de sécurité (21 ; 21') destiné à être percuté par le piston en cas de surcourse de ce dernier.

7. Dispositif selon l'une quelconque des revendications 4 à 6, **caractérisé par le fait que** la zone sécable (31 ; 31') relie un bouchon (23) vissé sur le carter du dispositif à une partie d'entraînement (30) apte à coopérer avec une clé ou tout autre outil permettant de visser le bouchon sur le carter du dispositif, le bouchon étant dépourvu de relief pouvant coopérer avec cette clé ou cet outil de manière que, lorsque la partie d'entraînement a été séparée du bouchon, il n'est plus possible de démonter le bouchon en utilisant une clé ou un outil similaire à celui qui a été utilisé pour fixer le bouchon sur le dispositif.

8. Dispositif selon la revendication précédente, **caractérisé par le fait que** le bouchon (23) comporte un corps creux avec en extrémité un pion sécable (25).

9. Dispositif selon la revendication précédente, **caractérisé par le fait que** le pion (25") comporte une partie de retenue (70) l'empêchant de passer à travers le corps creux et d'être expulsé hors du dispositif.

10. Dispositif selon la revendication précédente, **caractérisé par le fait que** ladite partie de retenue est formée par au moins une extension radiale, notamment un rebord annulaire (70) situé à l'extrémité supérieure du pion.

11. Dispositif selon l'une des revendications 9 et 10, **caractérisé par le fait qu'**il est dépourvu d'élément de retenue distinct de l'organe de sécurité.

12. Dispositif selon l'une quelconque des revendications 8 à 11, **caractérisé par le fait que** le bouchon comporte un passage (71) conformé de manière à faciliter l'écoulement du fluide compressible vers l'extérieur, ayant notamment une section s'élargissant vers l'extérieur

13. Dispositif selon la revendication 7, **caractérisé par le fait que** le bouchon est plein et est apte à être éjecté en entier en cas de surcourse du piston en raison de la résistance limitée des filetages coopérants du bouchon et du taraudage dans lequel celui-ci est vissé.

14. Dispositif selon l'une des revendications 4 et 5, **caractérisé par le fait que** ladite zone sécable est réalisée d'un seul tenant avec un élément distinct de l'organe de sécurité (60), cet élément étant de préférence un élément de retenue de l'organe de sécurité.

15. Dispositif selon la revendication précédente, **caractérisé par le fait que** lorsque l'organe de sécurité se présente sous la forme d'un bouchon creux comportant un pion en extrémité apte à être éjecté en cas de surcourse du piston, l'élément de retenue est agencé de manière à retenir ce pion et éviter son expulsion hors du dispositif.

16. Dispositif selon la revendication 14, **caractérisé par le fait que**, lorsque l'organe de sécurité est constitué par un bouchon plein, l'élément de retenue (65) est agencé de manière à retenir le bouchon (60) dans le dispositif (1) en cas de surcourse du piston.

17. Dispositif selon l'une quelconque des revendications 14 à 16, **caractérisé par le fait que** l'élément de retenue (65) se présente sous la forme d'une bague ou d'une vis creuse vissée dans un taraudage réalisé dans le carter du dispositif, en arrière de l'organe de sécurité (60).

18. Dispositif selon l'une quelconque des revendications 14 à 17, **caractérisé par le fait que** la zone sécable (67) relie une première partie (65) de l'élément de retenue, destinée à rester à demeure sur le dispositif après son montage, à une partie d'entraînement amovible (68), utilisée lors du montage de la première partie dans le dispositif.

19. Dispostif selon l'une des revendications 4 et 5, **caractérisé par le fait que**, lorsque l'élément de retenue (27) est maintenu sur le dispositif par un ou plusieurs éléments de fixation (28), la zone sécable est réalisée d'un seul tenant avec l'un au moins de ces éléments de fixation.

20. Dispositif selon la revendication précédente, **caractérisé par le fait que**, lorsque l'élément de retenue est constitué par une plaque (27) rapportée sur le carter du dispositif, de manière à interdire l'accès à l'organe de sécurité, la zone sécable est réalisée d'un seul tenant avec l'un au moins des éléments de fixation (28) utilisés pour maintenir cette plaque en place contre le carter.

21. Dispositif selon l'une quelconque des revendications précédentes, **caractérisé par le fait que** la zone sécable (31 ; 31' ; 67) se situe en retrait de l'ouverture d'un logement du carter (2) du dispositif ou d'un élément de retenue (27) éventuel rapporté sur celui-ci, de manière à empêcher, après rupture de cette partie sécable, un opérateur de venir en prise avec une pince sur la pièce en question afin de l'entraîner en rotation et de la dévisser.

22. Dispositif selon la revendication 5 et éventuellement l'une quelconque des revendications 6 à 21, **caractérisé par le fait que** la partie d'entraînement qui est reliée par la zone sécable au reste de l'organe de sécurité (21) ou de l'élément de retenue (65) ou de fixation comporte un logement (32) présentant une section transversale intérieure hexagonale, adaptée à coopérer avec une clé Allen.

23. Dispositif selon l'une quelconque des revendications 4 à 22, **caractérisé par le fait que** la zone sécable (31 ; 31') est constituée par une portion annulaire amincie, d'épaisseur constante ou décroissante en direction de la partie amovible ou de la partie destinée à rester à demeure sur le dispositif.

24. Dispositif selon l'une des revendications 1à 3, **caractérisé par le fait que** l'un au moins de l'organe de sécurité (21'), de l'élément de retenue ou de l'élément de fixation de l'organe de retenue comporte une zone déformable (50).

25. Dispositif selon la revendication précédente, **caractérisé par le fait que** l'organe de sécurité (21') ou l'élément de retenue comporte une partie d'entraînement (40) agencée pour coopérer avec une clé Allen ou tout autre outil utilisé lors du montage de l'organe de sécurité ou de l'élément de retenue sur le dispositif et un logement (41) pouvant recevoir un insert (45) apte à interdire l'accès à ladite partie d'entraînement, cet insert pouvant être fixé de manière inamovible sur l'organe de sécurité ou l'élément de retenue.

26. Dispositif selon la revendication précédente, **caractérisé par le fait que**, lorsque l'insert (45) est apte à être vissé dans l'organe de sécurité (21') ou l'élément de retenue, l'un au moins des filets (50) coopérants de l'insert d'une part, et de l'organe de sécurité ou de l'organe de retenue d'autre part, est apte à se déformer de manière à assurer la fixation inamovible de l'insert sur l'organe de sécurité ou l'élément de retenue.

27. Dispositif selon la revendication précédente, **caractérisé par le fait que** l'insert (45) se présente sous la forme d'une bague, filetée sur une partie seulement de sa longueur, et ledit logement (41) est taraudé sur une partie seulement de sa longueur, la longueur de la partie filetée (46) de l'insert étant supérieure à la longueur de la partie non taraudée (42) du logement (41), de manière qu'en fin de vissage, la rotation de l'insert provoque le foirage de l'un au moins des filets de l'insert et de la partie taraudée du logement.

28. Dispositif selon la revendication précédente, **caractérisé par le fait que** le matériau dans lequel l'insert (45) est réalisé présente une moindre ductilité que le matériau dans lequel est réalisé l'organe de sécurité (21') ou l'élément de retenue, de sorte que c'est la partie taraudée de l'organe de sécurité ou de l'élément de retenue qui est déformée lorsque l'insert est entraîné en rotation au terme de son vissage dans le logement correspondant.

29. Dispositif selon l'une des revendications 27 et 28, **caractérisé par le fait que** la partie non filetée (48) de l'insert (45) présente un diamètre extérieur qui correspond au diamètre intérieur de la partie taraudée (43) du logement (41), de sorte que l'insert est maintenu sans jeu radial sensible dans le logement correspondant.

30. Dispositif selon la revendication précédente, **caractérisé par le fait que** le frottement de l'insert (45) dans le logement (41) de l'organe de sécurité ou de l'élément de retenue est insuffisant pour permettre à l'opérateur en faisant tourner l'insert, d'entraîner l'organe de sécurité ou l'élément de retenue, afin de procéder au démontage de celui-ci, au moins tant que l'organe de sécurité n'a pas été percuté par le piston en cas de surcourse de ce dernier.

31. Dispositif selon l'une quelconque des revendications 26 à 30, **caractérisé par le fait que** l'insert (45) se présente sous la forme d'une bague filetée extérieurement sur une partie seulement de sa longueur, ayant une section transversale intérieure hexagonale, suffisamment petite pour empêcher l'accès à la partie d'entraînement (40) de l'organe de sécurité (21') ou de l'élément de retenue.

32. Dispositif selon l'une quelconque des revendications 26 à 31, **caractérisé par le fait que** l'insert (45) est agencé pour qu'en cas de surcourse du piston (6) entraînant la purge de la chambre de compression (3) et la déformation de l'organe de sécurité (21'), le frottement de l'insert dans le logement (41) correspondant de l'organe de sécurité ou de l'élément de retenue devienne suffisant pour qu'en tournant l'insert on puisse procéder au dévissage de l'organe de sécurité ou de l'élément de retenue.

33. Dispositif selon la revendication précédente, **caractérisé par le fait que**, l'organe de sécurité (21') étant constitué par un bouchon à corps creux, fermé à une extrémité par un pion sécable (25) et comportant à l'autre extrémité un logement (41) pouvant recevoir un insert (45), ce dernier est réalisé de manière à ce que le pion, après séparation du corps du bouchon, puisse en percutant l'insert provoquer une déformation de celui-ci suffisante pour modifier la manière dont il coopère avec le logement de l'organe de sécurité et permettre le démontage de l'ensemble.

34. Dispositif selon la revendication précédente, **caractérisé par le fait que** le pion (25) est apte à provoquer en s'encastrant partiellement dans l'insert (45) une expansion radiale de celui-ci ayant pour conséquence d'augmenter le coefficient de frottement entre l'insert (45) et l'organe de sécurité (21').

35. Dispositif selon l'une quelconque des revendications 26 à 34, **caractérisé par le fait que** la partie d'entraînement (40) utilisée pour visser le bouchon (23) sur le carter (2) du dispositif est réalisée en retrait du logement (41) recevant l'insert (45) et présente de préférence une section transversale intérieure hexagonale, de dimensions supérieures à celles de la section transversale intérieure de l'insert.

36. Organe de sécurité (21 ; 21") fixé sur le carter d'un dispositif à fluide compressible tel que défini dans l'une des revendications 1 à 3 pour être percuté par le piston en cas de surcourse de ce dernier, comportant une partie d'entraînement reliée par une zone sécable au reste de l'organe de sécurité.

37. Ensemble constitué d'un organe de sécurité (21') fixé sur le carter d'un dispositif à fluide compressible tel que défini dans l' une des revendications 1 à 3 pour être percuté par le piston en cas de surcourse de ce dernier et d'un insert (45) destiné à être fixé à l'intérieur de cet organe de sécurité pour rendre ce dernier indémontable, à tout le moins pendant le fonctionnement normal du ressort.

38. Elément de retenue (65) fixé sur le carter d'un dispositif à fluide compressible tel que défini dans l'une des revendications 2 à 3 pour retenir un organe de sécurité destiné à être percuté par le piston en cas de surcourse de ce dernier, pourvu d'une partie d'entraînement reliée par une zone sécable au reste de l'élément de retenue.

39. Procédé de fabrication d'un dispositif à fluide compressible tel que défini dans l'une des revendications 1 à 3, du type comportant une chambre de compression et un piston mobile dans cette chambre, ainsi qu'un organe de sécurité disposé de manière à être percuté par le piston en cas de surcourse de ce dernier, afin de purger la chambre de compression, ce procédé étant **caractérisé par le fait qu'**il comporte les étapes suivantes :
i) l'organe de sécurité comportant une partie d'entraînement sécable, visser l'organe de sécurité sur le dispositif en l'entraînant en rotation au moyen d'un outil tel qu'une clé Allen coopérant avec la partie d'entraînement sécable, puis, au terme du vissage, poursuivre la rotation pour provoquer la rupture de la partie d'entraînement sécable, ou
ii) l'organe de sécurité étant pourvu d'un logement pouvant recevoir un insert et en retrait de ce logement d'une partie d'entraînement pouvant coopérer avec un outil tel qu'une clé Allen, visser l'organe de sécurité dans le dispositif, puis au terme du vissage de l'organe de sécurité, visser l'insert dans ledit logement et au terme du vissage de l'insert forcer le mouvement de rotation de l'insert de manière à provoquer le foirage des filets coopérants de l'insert et de l'organe de sécurité, ou
iii) mettre en place l'organe de sécurité sur le dispositif puis fixer sur le dispositif un élément de retenue, cet élément de retenue comportant une partie d'entraînement reliée au reste de l'élément de retenue par une zone sécable, puis au terme du vissage de l'élément de retenue, poursuivre la rotation de manière à entraîner la rupture de la zone sécable et la séparation de la partie d'entraînement, ou
iv) fixer l'organe de sécurité sur le dispositif, placer un élément de retenue sur le dispositif, fixer l'élément de retenue sur le dispositif au moyen d'au moins un élément de fixation comportant une partie d'entraînement reliée au reste de l'élément de fixation par une zone sécable, visser l'élément de fixation sur le dispositif puis au terme du vissage, forcer la rotation de manière à provoquer la rupture de la zone sécable et la séparation de la partie d'entraînement, ou
v) fixer l'organe de sécurité sur le dispositif, altérer la forme avec ou sans enlèvement de matière de l'organe de sécurité de manière à le rendre indémontable, de préférence en détruisant des reliefs ayant servi au montage, ou
vi) fixer l'organe de sécurité sur le dispositif, fixer un élément de retenue de l'organe de sécurité sur le dispositif et altérer la forme, avec ou sans enlèvement de matière, de l'organe de sécurité de manière à rendre l'élément de retenue indémontable sans lui faire perdre sa fonction de retenue de l'organe de sécurité, ou
vii) fixer l'organe de sécurité sur le dispositif, fixer au moyen d'au moins un élément de fixation un élément de retenue de l'organe de sécurité sur le dispositif et altérer la forme, avec ou sans enlèvement de matière, de l'élément de fixation de manière à le rendre indémontable.

## Claims

1. A compressible fluid device such as a gas spring (1; 80), the device comprising a casing (2; 81) defining a compression chamber (3; 82), and a piston (4; 83) movable in the chamber, together with a safety member (21; 21'; 21"; 60) placed in such a manner as to be struck by the piston in the event of the piston overrunning so as to cause the compression chamber to be purged, the safety member being arranged in such a manner as to be mounted in the casing from outside the casing, said device being **characterized by** the fact that:
the safety member (21; 21'; 21") includes at least one weak zone (31; 31'; 50) suitable for being broken or deformed during assembly so as to cause the safety member to become inaccessible or non-removable, at least until it has been struck by the piston and the compression chamber has been purged of the compressible fluid.

2. A compressible fluid device such as a gas spring (1; 80), the device comprising a casing (2; 81) defining a compression chamber (3; 82), and a piston (4; 83) movable in the chamber, together with a safety member (21; 21'; 21"; 60) placed in such a manner as to be struck by the piston in the event of the piston overrunning so as to cause the compression chamber to be purged, the safety member being arranged in such a manner as to be mounted in the casing from outside the casing, the device comprising a retaining element (27; 65) for retaining the safety member, said device being **characterized by** the fact that :
the retaining element includes at least one weak zone (50; 67) suitable for being broken or deformed during assembly so as to cause the safety member to become inaccessible or non-removable, at least until it has been struck by the piston and the compression chamber has been purged of the compressible fluid.

3. A compressible fluid device such as a gas spring (1; 80), the device comprising a casing (2; 81) defining a compression chamber (3; 82), and a piston (4; 83) movable in the chamber, together with a safety member (21; 21'; 21"; 60) placed in such a manner as to be struck by the piston in the event of the piston overrunning so as to cause the compression chamber to be purged, the safety member being arranged in such a manner as to be mounted in the casing from outside the casing, the device comprising a retaining element (27; 65) for retaining the safety member, said device being **characterized by** the fact that :
the fastener (28) for fixing the retaining element to the device includes a weak zone (50) suitable for being broken or deformed during assembly so as to cause the safety member to become inaccessible or non-removable, at least until it has been struck by the piston and the compression chamber has been purged of the compressible fluid.

4. A device according to any preceding claim, **characterized by** the fact that at least one of the safety member (21; 21") and the retaining element (65) or the fastener (28) includes a weak zone (31; 31'; 67) that is breakable.

5. A device according to any preceding claim, **characterized by** the fact that said breakable zone (31; 31'; 67) connects a first portion (23; 65) for remaining permanently in the device at least during normal operation thereof to a removable second portion (30; 68) for enabling the first portion to be put into place in the device and subsequently to be separated therefrom so as to prevent the first portion from being removed thereafter.

6. A device according to either one of the two immediately preceding claims, **characterized by** the fact that said breakable zone (31; 31') is made integrally with the safety member (21; 21') that is to be struck by the piston in the event of it overrunning.

7. A device according to any one of claims 4 to 6, **characterized by** the fact that the breakable zone (31; 31') connects a plug (23) screwed into the casing of the device to a driving portion (30) suitable for co-operating with a key or any other tool enabling the plug to be screwed into the casing of the device, the plug having no relief suitable for co-operating with said key or said tool, so that once the driving portion has been separated from the plug it is no longer possible to remove the plug by using a key or a tool similar to that which was used for fixing the plug to the device.

8. A device according to the preceding claim, **characterized by** the fact that the plug (23) comprises a hollow body with a breakable peg (25) at its end.

9. A device according to the preceding claim, **characterized by** the fact that the peg (25") includes a retaining portion (70) preventing it from passing through the hollow body and being expelled from the device.

10. A device according to the preceding claim, **characterized by** the fact that said retaining portion is formed by at least one radial extension, in particular an annular rim (70) situated at the top end of the peg.

11. A device according to claim 9 or claim 10, **characterized by** the fact that it does not have a retaining element that is distinct from the safety member.

12. A device according to any one of claims 8 to 11, **characterized by** the fact that the plug includes a passage (71) shaped in such a manner as to facilitate outward flow of the compressible fluid, in particular a passage having a section that flares outwardly.

13. A device according to claim 7, **characterized by** the fact that the plug is solid and is suitable for being ejected as a whole in the event of the piston overrunning, because of the limited strength of the co-operating threads of the plug and the tapping in which the plug is screwed.

14. A device according to claim 4 or claim 5, **characterized by** the fact that said breakable zone is made integrally with an element that is distinct from the safety member (60), said element preferably being an element for retaining the safety member.

15. A device according to the preceding claim, **characterized by** the fact that the safety member is in the form of a hollow plug including an end peg suitable for being ejected in the event of the piston overrunning, and the retaining element is arranged in such a manner as to retain said peg and prevent it from being expelled from the device.

16. A device according to claim 14, **characterized by** the fact that when the safety member is constituted by a solid plug, the retaining element (65) is arranged in such a manner as to retain the plug (60) in the device (1) in the event of the piston overrunning.

17. A device according to any one of claims 14 to 16, **characterized by** the fact that the retaining element (65) is in the form of a ring or a hollow screw screwed into tapping formed in the casing of the device, behind the safety member (60).

18. A device according to any one of claims 14 to 17, **characterized by** the fact that the breakable zone (67) connects a first portion (65) of the retaining element that is to remain permanently in the device after assembly, to a removable driving portion (68) which is used while assembling the first portion in the device.

19. A device according to claim 4 or claim 5, **characterized by** the fact that when the retaining element (27) is held on the device by one or more fasteners (28), the breakable zone is formed integrally with at least one of said fasteners.

20. A device according to the preceding claim, **characterized by** the fact that when the retaining element is constituted by a plate (27) fitted to the casing of the device in such a manner as to prevent access to the safety member, the breakable zone is formed integrally with at least one of the fasteners (28) used for holding said plate in place against the casing.

21. A device according to any preceding claim, **characterized by** the fact that the breakable zone (31; 31'; 67) is set back from the opening of a housing in the casing (2) of the device or from any retaining element (27) fitted thereto, so that once said weak portion has ruptured, an operator is prevented from engaging a pair of pliers on the piece in question in order to turn it and unscrew it.

22. A device according to claim 5 and optionally any one of claims 6 to 21, **characterized by** the fact that the driving portion which is connected via the breakable zone to the remainder of the safety member (21) or the retaining element (65) or the fastener includes a housing (32) of hexagonal inside cross-section suitable for co-operating with an Allen key.

23. A device according to any one of claims 4 to 22, **characterized by** the fact that the breakable zone (31; 31') is constituted by a thin annular portion of thickness that is constant or that tapers towards the removable portion or the portion that is to remain permanently in the device.

24. A device according to any one of claims 1 to 3, **characterized by** the fact that at least one of the safety member (21') and the retaining element or the fastener for the retaining member includes a deformable zone (50).

25. A device according to the preceding claim, **characterized by** the fact that the safety member (21') or the retaining element includes a driving portion (40) arranged to co-operate with an Allen key or with any other tool used for assembling the safety member or the retaining element to the device, and a housing (41) suitable for receiving an insert (45) suitable for preventing access to said driving portion, said insert being capable of being fixed in non-removable manner to the safety member or the retaining element.

26. A device according to the preceding claim, **characterized by** the fact that when the insert (45) is suitable for being screwed into the safety member (21') or the retaining element, at least one of the co-operating threads (50) of the insert and of the safety member or the retaining member is suitable for deforming so as to ensure that the insert is fixed in non-removable manner to the safety member or the retaining element.

27. A device according to the preceding claim, **characterized by** the fact that the insert (45) is in the form of a ring which is threaded over a fraction only of its length, and said housing (41) is tapped over a fraction only of its length, the length of the threaded portion (46) of the insert being longer than the length of the non-tapped portion (42) of the housing (41) in such a manner that once it has been screwed home, further turning of the insert causes at least one of the threads of the insert and of the tapped portion of the housing to be stripped.

28. A device according to the preceding claim, **characterized by** the fact that the material from which the insert (45) is made is less ductile than the material from which the safety member (21') or the retaining element is made, such that it is the tapped portion of the safety member or of the retaining element which is deformed when the insert continues to be turned once it has been screwed home into the corresponding housing.

29. A device according to claim 27 or claim 28, **characterized by** the fact that the non-threaded portion (48) of the insert (45) presents an outside diameter which corresponds to the inside diameter of the tapped portion (43) of the housing (41) in such a manner that the insert is held without perceptible radial clearance in the corresponding housing.

30. A device according to the preceding claim, **characterized by** the fact that friction between the insert (45) and the housing (41) of the safety member or the retaining element is not sufficient to enable an operator to remove the safety member or the retaining element by driving it by turning the insert, at least not until the safety member has been struck by the piston overrunning.

31. A device according to any one of claims 26 to 30, **characterized by** the fact that the insert (45) is in the form of a ring having an outside thread over a fraction only of its length, having an inside cross-section that is hexagonal and small enough to prevent access to the driving portion (40) of the safety member (21') or of the retaining element.

32. A device according to any one of claims 26 to 31, **characterized by** the fact that the insert (45) is arranged in such a manner that in the event of the piston (6) overrunning, thereby causing the compression chamber (3) to be purged and the safety member (21') to be deformed, friction between the insert and the corresponding housing (41) in the safety member or the retaining element becomes sufficient to enable the safety member or the retaining element to be unscrewed by turning the insert.

33. A device according to the preceding claim, **characterized by** the fact that when the safety member (21') is constituted by a plug having a hollow body closed at one end by a breakable peg (25) and has a housing (41) at its other end suitable for receiving an insert (45), the insert is made in such a manner that, after the peg has been separated from the body of the plug, it is capable on striking the insert of deforming the insert sufficiently to modify the way in which it cooperates with the housing in the safety member, thereby enabling the assembly to be removed.

34. A device according to the preceding claim, **characterized by** the fact that the peg (25) is suitable for causing the insert (45) to expand radially when part of the peg is received therein, thereby increasing the coefficient of friction between the insert (45) and the safety member (21').

35. A device according to any one of claims 26 to 34, **characterized by** the fact that the driving portion (40) used for screwing the plug (23) into the casing (2) of the device is made to be set back from the housing (41) that receives the insert (45) and preferably presents an inside cross-section that is hexagonal, of dimensions greater than those of the inside cross-section of the insert.

36. A safety member (21; 21") fixed to the casing of a compressible fluid device such as defined in any one of claims 1 to 3 in order to be struck by the piston in the event of the piston overrunning, the safety member having a driving portion that is connected to the remainder of the safety member by means of a breakable zone.

37. An assembly constituted by a safety member (21') fixed to the casing of a compressible fluid device such as defined in any one of claims 1 to 3 to be struck by the piston in the event of the piston overrunning, and an insert (45) for fixing to the inside of said safety member so as to make it non-removable, at least while the spring is in normal operation.

38. A retaining element (65) fixed to the casing of a compressible fluid device such as defined in any one of claims 1 to 3 for the purpose of retaining a safety member designed to be struck by the piston in the event of the piston overrunning, the retaining element being provided with a driving portion that is connected to the remainder of the retaining element via a breakable zone.

39. A method of manufacturing a compressible fluid device such as defined in any one of claims 1 to 3, the device being of the type comprising a compression chamber, a piston that is movable in said chamber, and a safety member placed in such a manner as to be struck by the piston in the event of the piston overrunning in order to enable the compression chamber to be purged, the method being **characterized by** the fact that it comprises the following steps:
i) providing the safety member with a breakable driving portion and screwing the safety member to the device by turning it using a tool such as an Allen key co-operating with the breakable driving portion, and then once it has been screwed home, continuing to turn the tool so as to break off the breakable driving portion; or
ii) providing the safety member with a housing suitable for receiving an insert and with a driving portion set back from said housing and suitable for co-operating with a tool such as an Allen key, and screwing the safety member into the device, and then once the safety member has been screwed home, screwing the insert into said housing, and once the insert has been screwed home, continuing to turn the insert in such a manner as to strip the co-operating threads of the insert and the safety member; or
iii) putting the safety member into place in the device and then fixing a retaining element to the device, the retaining element including a driving portion connected to the remainder of the retaining element by a breakable zone, and then once the retaining element has been screwed home, continuing to turn it so as to rupture the breakable zone and separate the driving portion; or
iv) fixing the safety member to the device, placing a retaining element on the device, fixing the retaining element to the device by means of at least one fastener including a driving portion connected to the remainder of the fastener by a breakable zone, screwing the fastener to the device, and once the element has been screwed home, continuing to turn it so as to rupture the breakable zone and separate the driving portion; or
v) fixing the safety member to the device, altering the shape of the safety member in such a manner as to make it non-removable, with or without removing material therefrom, and preferably destroying relief that was used for assembly purposes; or
vi) fixing the safety member to the device, fixing a safety member retaining element to the device, and altering the shape of the safety member, with or without removing material therefrom, so as to make the retaining element non-removable without losing its function of retaining the safety member; or
vii) fixing the safety member to the device, fixing at least one safety member retaining element to the device by means of at least one fastener, and altering the shape of the fastener, with or without removing material therefrom, in such a manner as to make it non-removable.

## Patentansprüche

1. Vorrichtung mit einem kompressiblen Fluid, wie eine Gasfeder (1; 80), mit einem eine Druckkammer (3; 82) bildenden Gehäuse (2; 81) und einem in dieser Kammer beweglichen Kolben (4; 83), sowie einem Sicherheitselement (21; 21'; 21"), das auf solche Weise angebracht ist, dass es vom Kolben durchstoßen wird, wenn dieser einen übermäßigen Hub ausführt, um für ein Entleeren der Druckkammer zu sorgen, wobei dieses Sicherheitselement auf solche Weise aufgebaut ist, dass es von der Außenseite des Gehäuses her an diesem montiert wird, **dadurch gekennzeichnet, dass**:
das Sicherheitselement (21; 21'; 21") mindestens eine durchtrennbare (31; 31') oder verformbare (50) Zone aufweist, die bei der Montage abgebrochen oder verformt werden kann, um infolgedessen das Sicherheitselement zumindest solange nicht zugänglich oder nicht abmontierbar zu machen, wie es nicht vom Kolben durchstoßen wurde und die Druckkammer nicht vom komprimierbaren Fluid entleert ist.

2. Vorrichtung mit einem kompressiblen Fluid, wie eine Gasfeder (1; 80), mit einem eine Druckkammer (3; 82) bildenden Gehäuse (2; 81) und einem in dieser Kammer beweglichen Kolben (4; 83), sowie einem Sicherheitselement (21; 21'; 21"), das auf solche Weise angebracht ist, dass es vom Kolben durchstoßen wird, wenn dieser einen übermäßigen Hub ausführt, um für ein Entleeren der Druckkammer zu sorgen, wobei dieses Sicherheitselement auf solche Weise aufgebaut ist, dass es von der Außenseite des Gehäuses her an diesem montiert wird, wobei die Vorrichtung über ein Halteelement (27; 65) für das Sicherheitselement verfügt, **dadurch gekennzeichnet, dass**:
das Halteelement (27; 65) mindestens eine durchtrennbare (67) oder verformbare (50) Zone aufweist, die bei der Montage abgebrochen oder verformt werden kann, um infolgedessen das Sicherheitselement zumindest solange nicht zugänglich oder nicht abmontierbar zu machen, wie es nicht vom Kolben durchstoßen wurde und die Druckkammer nicht vom komprimierbaren Fluid entleert ist.

3. Vorrichtung mit einem kompressiblen Fluid, wie eine Gasfeder (1; 80), mit einem eine Druckkammer (3; 82) bildenden Gehäuse (2; 81) und einem in dieser Kammer beweglichen Kolben (4; 83), sowie einem Sicherheitselement (21; 21'; 21"), das auf solche Weise angebracht ist, dass es vom Kolben durchstoßen wird, wenn dieser einen übermäßigen Hub ausführt, um für ein Entleeren der Druckkammer zu sorgen, wobei dieses Sicherheitselement auf solche Weise aufgebaut ist, dass es von der Außenseite des Gehäuses her an diesem montiert wird, wobei die Vorrichtung über ein Halteelement (27; 65) für das Sicherheitselement verfügt, **dadurch gekennzeichnet, dass**:
das Befestigungselement (28) des Halteelements an der Vorrichtung mindestens eine durchtrennbare oder verformbare (50) Zone aufweist, die bei der Montage abgebrochen oder verformt werden kann, um infolgedessen das Sicherheitselement zumindest solange nicht zugänglich oder nicht abmontierbar zu machen, wie es nicht vom Kolben durchstoßen wurde und die Druckkammer nicht vom komprimierbaren Fluid entleert ist.

4. Vorrichtung nach einem der vorstehenden Ansprüche, **dadurch gekennzeichnet, dass** betreffend das Sicherheitselement (21; 21") das Halteelement (65) oder das Befestigungselement (28 mindestens eine durchtrennbare Zone (31; 31'; 67) aufweist.

5. Vorrichtung nach dem vorstehenden Anspruch, **dadurch gekennzeichnet, dass** die genannte durchtrennbare Zone (31; 31'; 67) einen ersten Teil (23; 65), der zumindest bei normaler Funktion der Vorrichtung an dieser zurückbleiben soll, mit einem zweiten, unbeweglichen Teil (30; 68) verbindet, der das Anbringen des ersten Teils an der Vorrichtung ermöglichen soll und der anschließend von ihm abzutrennen ist, um anschließend seine Demontage zu verhindern.

6. Vorrichtung nach einem der zwei unmittelbar vorangehenden Ansprüche, **dadurch gekennzeichnet, dass** die genannte durchtrennbare Zone (31; 31') einstückig mit dem Sicherheitselement (21; 21') ausgebildet ist, um bei einem übermäßigen Hub des Kolbens von diesem durchstoßen zu werden.

7. Vorrichtung nach einem der Ansprüche 4 bis 6, **dadurch gekennzeichnet, dass** die abtrennbare Zone (31; 31') einen auf das Gehäuse der Vorrichtung geschraubten Verschluss (23) mit einem Mitnahmeteil (30) verbindet, das mit einem Schlüssel oder einem anderen Werkzeug zusammenwirken kann, das es ermöglicht, den Verschluss an das Gehäuse der Vorrichtung zu schrauben, wobei der Verschluss kein Profil aufweist, das mit dem Schlüssel oder dem Werkzeug zusammenwirken könnte, so dass es, nachdem der Mitnahmeteil vom Verschluss abgetrennt wurde, nicht mehr möglich ist, den Verschluss unter Verwendung eines Schlüssels oder eines Werkzeugs abzumontieren, das demjenigen ähnlich ist, das zum Befestigen des Verschlusses an der Vorrichtung verwendet wurde.

8. Vorrichtung nach dem vorstehenden Anspruch, **dadurch gekennzeichnet, dass** der Verschluss (23) einen Hohlkörper mit einem abtrennbaren Zapfen (25) am Ende aufweist.

9. Vorrichtung nach dem vorstehenden Anspruch, **dadurch gekennzeichnet, dass** der Zapfen (25") ein Anschlagsteil (70) aufweist, das es verhindert, dass er sich durch den Hohlkörper bewegt und aus der Vorrichtung ausgeworfen wird.

10. Vorrichtung nach dem vorstehenden Anspruch, **dadurch gekennzeichnet, dass** das genannte Anschlagsteil zumindest mit einem radialen Bund ausgebildet ist, insbesondere einem ringförmigen Vorsprung (70), der sich am oberen Ende des Zapfens befindet.

11. Vorrichtung nach einem der Ansprüche 9 oder 10, **dadurch gekennzeichnet, dass** sie über kein vom Sicherheitselement getrenntes Halteelement verfügt.

12. Vorrichtung nach einem der Ansprüche 8 bis 11, **dadurch gekennzeichnet, dass** der Verschluss einen Kanal (71) aufweist, der auf solche Weise ausgebildet ist, dass er das Ausfließen des kompressiblen Fluids nach außen erleichtert, wobei er insbesondere einen sich nach außen vergrößernden Querschnitt aufweist.

13. Vorrichtung nach Anspruch 7, **dadurch gekennzeichnet, dass** der Verschluss massiv ist und aufgrund des beschränkten Widerstands seiner zusammenwirkenden Gewindegänge und des Gewindes, in das er geschraubt ist, als Ganzes ausgestoßen werden kann.

14. Vorrichtung nach einem der Ansprüche 4 oder 5, **dadurch gekennzeichnet, dass** die genannte durchtrennbare Zone einstückig mit einem charakteristischen Element des Sicherheitselements (60) ausgebildet ist, wobei dieses charakteristische Element vorzugsweise ein Halteelement des Sicherheitselements ist.

15. Vorrichtung nach dem vorstehenden Anspruch, **dadurch gekennzeichnet, dass** dann, wenn das Sicherheitselement in Form eines hohlen Verschlusses mit einem Zapfen am Ende vorliegt, der bei einem übermäßigen Hub des Kolbens ausgestoßen werden kann, das Halteelement auf solche Weise ausgebildet ist, dass es den Zapfen zurückhält und sein Ausstoßen aus der Vorrichtung verhindert.

16. Vorrichtung nach Anspruch 14, **dadurch gekennzeichnet, dass** dann, wenn das Sicherheitselement aus einem massiven Verschluss besteht, das Halteelement (65) auf solche Weise ausgebildet ist, dass es den Verschluss (60) in der Vorrichtung (1) zurückhält, wenn der Kolben einen übermäßigen Hub ausführt.

17. Vorrichtung nach einem der Ansprüche 14 bis 16, **dadurch gekennzeichnet, dass** das Halteelement (65) in Form eines Rings oder einer Hohlschraube vorliegt, der bzw. die in ein im Gehäuse der Vorrichtung ausgebildetes Gewinde eingeschraubt ist und sich an der Rückseite des Sicherheitselements (60) befindet.

18. Vorrichtung nach einem der Ansprüche 14 bis 17, **dadurch gekennzeichnet, dass** die durchtrennbare Zone (67) einen ersten Teil (65) des Halteelements, der nach seiner Montage an der Vorrichtung zurückbleiben soll, mit einem unbeweglichen Mitnahmeteil (68) verbindet, der bei der Montage des ersten Teils in der Vorrichtung verwendet wird.

19. Vorrichtung nach einem der Ansprüche 4 oder 5, **dadurch gekennzeichnet, dass** dann, wenn das Halteelement (27) durch ein oder mehrere Befestigungselemente (28) an der Vorrichtung gehalten wird, die durchtrennbare Zone einstückig mit mindestens einem dieser Befestigungselemente ausgebildet ist.

20. Vorrichtung nach dem vorstehenden Anspruch, **dadurch gekennzeichnet, dass** dann, wenn das Halteelement aus einer Platte (27) besteht, die so auf das Gehäuse der Vorrichtung aufgesteckt ist, dass der Zugang zum Sicherheitselement verhindert ist, die durchtrennbare Zone einstückig mit mindestens einem Befestigungselement (28) ausgebildet ist, die dazu verwendet werden, diese Platte am Gehäuse zu halten.

21. Vorrichtung nach einem der vorstehenden Ansprüche, **dadurch gekennzeichnet, dass** sich die durchtrennbare Zone (31; 31'; 67) zurückversetzt gegenüber der Öffnung einer Aufnahme des Gehäuses (2) der Vorrichtung oder eines Halteelements (27), das möglicherweise damit verbunden ist, befindet, um, nach dem Zerstören des durchtrennbaren Teils, einen Bediener daran zu hindern, das Teil mit einer Zange zu ergreifen, um es in Drehung zu versetzen und abzuschrauben.

22. Vorrichtung nach Anspruch 5, und eventuell einem der Ansprüche 4 bis 21, **dadurch gekennzeichnet, dass** der Mitnahmeteil, der durch die durchtrennbare Zone mit dem Rest des Sicherheitselements (21) oder des Halteelements (65) oder des Befestigungselements verbunden ist, einen Sitz (32) mit sechseckigem Innenquerschnitt aufweist, der mit einem Innensechskantschlüssel zusammenwirken kann.

23. Vorrichtung nach einem der Ansprüche 4 bis 22, **dadurch gekennzeichnet, dass** die durchtrennbare Zone (31; 31') aus einem ringförmigen, verdünnten Teil besteht, dessen Dicke konstant ist oder in der Richtung des unbeweglichen Teils oder desjenigen Teils abnimmt, der an der Vorrichtung zurückbleiben soll.

24. Vorrichtung nach einem der Ansprüche 1 bis 3, **dadurch gekennzeichnet, dass** betreffend das Sicherheitselement (21'), das Halteelement oder das Befestigungselement des Halteelements mindestens eine verformbare Zone (50) aufweist.

25. Vorrichtung nach dem vorstehenden Anspruch, **dadurch gekennzeichnet, dass** das Sicherheitselement (21') oder das Halteelement ein Mitnahmeteil (40), das dazu ausgebildet ist, mit einem Innensechskantschlüssel oder einem beliebigen anderen Werkzeug zusammenzuwirken, das bei der Montage des Sicherheitselements oder des Halteelements an der Vorrichtung verwendet wird, und einen Sitz (41) aufweist, der einen Einsatz (45) aufnehmen kann, der den Zugang zum Mitnahmeteil verhindert, wobei dieser Einsatz auf unbewegliche Weise am Sicherheitselement oder am Halteelement befestigt werden kann.

26. Vorrichtung nach dem vorstehenden Anspruch, **dadurch gekennzeichnet, dass** dann, wenn der Einsatz (45) in das Sicherheitselement (21') oder das Halteelement geschraubt werden kann, betreffend einerseits die zusammenwirkenden Gewindegänge (50) des Einsatzes und andererseits die zusammenwirkenden Gewindegänge des Sicherheitselements oder des Halteelements, sich mindestens eines verformen kann, um die unbewegliche Befestigung des Einsatzes am Sicherheitselement oder am Halteelement zu gewährleisten.

27. Vorrichtung nach dem vorstehenden Anspruch, **dadurch gekennzeichnet, dass** der Einsatz (65) in Form eines Rings vorliegt, der nur in einem Teil seiner Länge mit einem Gewinde versehen ist, und der Sitz (41) nur über einen Teil seiner Länge mit einem Gewinde versehen ist, wobei die Länge des Gewindeteils (46) des Einsatzes größer als die Länge des gewindefreien Teils (42) des Sitzes (41) ist, so dass am Ende des Einschraubvorgangs die Drehung des Einsatzes dazu führt, dass sich betreffend die Gewindegänge des Einsatzes und den Gewindeteil des Sitzes an mindestens einem eine fehlerhafte Stelle bildet.

28. Vorrichtung nach dem vorstehenden Anspruch, **dadurch gekennzeichnet, dass** das Material, aus dem der Einsatz (45) besteht, geringere Duktilität als dasjenige Material aufweist, aus dem das Sicherheitselement (21') oder das Halteelement besteht, so dass der Gewindeteil des Sicherheitselements oder des Halteelements verformt wird, wenn der Einsatz bei seinem Einschrauben in den entsprechenden Sitz drehend angetrieben wird.

29. Vorrichtung nach einem der Ansprüche 27 oder 28, **dadurch gekennzeichnet, dass** der gewindefreie Teil (48) des Einsatzes (45) einen Außendurchmesser aufweist, der dem Innendurchmesser des Gewindeteils (43) des Sitzes 841) entspricht, so dass der Einsatz im wesentlichen ohne radiales Spiel im entsprechenden Sitz gehalten wird.

30. Vorrichtung nach dem vorstehenden Anspruch, **dadurch gekennzeichnet, dass** die Reibung des Einsatzes (45) im Sitz (41) des Sicherheitselements oder des Halteelements nicht dazu ausreicht, es dem Bediener zu ermöglichen, beim Drehen des Einsatzes das Sicherheitselement oder das Haltelement mitzunehmen, um zur Demontage desselben zu schreiten, zumindest solange nicht das Sicherheitselement durch den Kolben bei einem übermäßigen Hub desselben durchstoßen wurde.

31. Vorrichtung nach einem der Ansprüche 26 bis 30, **dadurch gekennzeichnet, dass** der Einsatz (45) in Form eines Rings mit Au-ßengewinde nur über einen Teil seiner Länge vorliegt, wobei er über einen sechseckigen Innenquerschnitt verfügt, der ausreichend klein ist, um dem Mitnahmeteil (40) des Sicherheitselements (21') oder des Halteelements den Zutritt zu verwehren.

32. Vorrichtung nach einem der Ansprüche 26 bis 31, **dadurch gekennzeichnet, dass** der Einsatz (45) so ausgebildet ist, dass er bei einem übermäßigen Hub des Kolbens (6), der ein Entleeren der Druckkammer (3) und eine Verformung des Sicherheitselements (21') zur Folge hat, die Reibung des Einsatzes im Sitz (41), der dem Sicherheitselement oder dem Halteelement entspricht, ausreichend groß wird, um es durch Drehen des Einsatzes zu ermöglichen, mit dem Abschrauben des Sicherheitselements oder des Halteelements fortzufahren.

33. Vorrichtung nach dem vorstehenden Anspruch, **dadurch gekennzeichnet, dass** das Sicherheitselement (21') aus einem Verschluss mit hohlem Körper besteht, der an einem Ende durch einen abtrennbaren Zapfen (25) verschlossen ist und am anderen Ende einen Sitz (41) aufweist, der einen Einsatz (45) aufnehmen kann, der auf solche Weise ausgebildet ist, dass der Zapfen, nach seiner Abtrennung vom Körper des Verschlusses, durch Durchstoßen des Einsatzes zu einer Verformung desselben führen kann, die dazu ausreicht, die Art und Weise zu modifizieren, gemäß der er mit dem Sitz des Sicherheitselements zusammenwirkt, um die Abmontage der Baugruppe zu ermöglichen.

34. Vorrichtung nach dem vorstehenden Anspruch, **dadurch gekennzeichnet, dass** der Zapfen (25) durch teilweises Eindringen in den Einsatz (45) eine radiale Ausdehnung desselben hervorrufen kann, die eine Vergrößerung des Koeffizienten der Reibung zwischen dem Einsatz (45) und dem Sicherheitselement (21') zur Folge hat.

35. Vorrichtung nach einem der Ansprüche 26 bis 34, **dadurch gekennzeichnet, dass** der Mitnahmeteil (40), der dazu verwendet wird, den Verschluss (23) an das Gehäuse (2) der Vorrichtung zu schrauben, zurückversetzt gegenüber dem den Einsatz (45) aufnehmenden Sitz (41) ausgebildet ist, und er vorzugsweise einen sechseckigen Innenquerschnitt mit Abmessungen bildet, die größer als diejenigen des Innenquerschnitts des Einsatzes sind.

36. Sicherheitselement (21; 21"), das am Gehäuse einer Vorrichtung mit komprimierbarem Fluid gemäß einem der Ansprüche 1 bis 3 befestigt wird, um bei einem übermäßigen Hub des Kolbens von diesem durchstoßen zu werden, mit einem Mitnahmeteil, der durch eine durchtrennbare Zone mit dem Rest des Sicherheitselements verbunden ist.

37. Baugruppe aus einem Sicherheitselement (21'), das am Gehäuse einer Vorrichtung mit kompressiblen Fluid gemäß einem der Ansprüche 1 bis 3 befestigt wird, um bei einem übermäßigen Hub des Kolbens von diesem durchstoßen zu werden, und einem Einsatz (45), der dazu bestimmt ist, im Inneren dieses Sicherheitselements befestigt zu werden, um es, zumindest während normaler Funktion der Feder, nicht abmontierbar zu machen.

38. Halteelement (65), das am Gehäuse einer Vorrichtung mit kompressiblen Fluid, wie sie in einem der Ansprüche 2 und 3 definiert ist, befestigt wird, um ein Sicherheitselement zu halten, das bei einem übermäßigen Hub des Kolbens von diesem durchstoßen werden soll, wobei es mit einem Mitnahmeteil versehen ist, das über eine durchtrennbare Zone mit dem Rest dieses Halteelements verbunden ist.

39. Verfahren zum Herstellen einer Vorrichtung mit kompressiblem Fluid, wie sie in einem der Ansprüche 1 bis 3 definiert ist, vom Typ mit einer Druckkammer und einem in dieser beweglichen Kolben sowie einem Sicherheitselement, das auf solche Weise angebracht ist, dass es bei einem übermäßigen Hub des Kolbens von diesem durchstoßen wird, um die Druckkammer zu entleeren, **dadurch gekennzeichnet, dass** es die folgenden Schritte aufweist:
i) Anschrauben des Sicherheitselements, das einen durchtrennbaren Mitnahmeteil trägt, an die Vorrichtung durch drehendes Antreiben mit einem Werkzeug wie einem Innensechskantschlüssel, der mit dem abtrennbaren Mitnahmeteil zusammenwirkt, und anschließendes, beim Ende des Einschraubens, Fortsetzen der Drehung, um für ein Zerstören des durchtrennbaren Mitnahmeteils zu sorgen, oder
ii) Einschrauben des Sicherheitselements, das mit einem Sitz versehen ist, der einen Einsatz aufnehmen kann, und das gegenüber dem Sitz zurückversetzt mit einem Mitnahmeteil versehen ist, das mit einem Werkzeug wie einem Innensechskantschlüssel versehen ist, in die Vorrichtung, und anschließendes, wie am Ende des Einschraubens des Sicherheitselements, Einschrauben des Einsatzes in den Sitz, wobei am Ende des Einschraubens des Sitzes eine Drehbewegung des Sitzes auf solche Weise erzwungen wird, dass es zu einer Beschädigung der zusammenwirkenden Gewindegänge des Einsatzes und des Sicherheitselements kommt; oder
iii) Anbringen des Sicherheitselements an der Vorrichtung und anschließendes Befestigen eines Halteelements an der Vorrichtung, das über einen Halteteil verfügt, der durch eine durchtrennbare Zone mit dem Rest des Elements verbunden ist, und anschließendes, am Ende des Einschraubens des Halteelements, Fortsetzen der Drehung auf eine Weise, die ein Zerstören der durchtrennbaren Zone und ein Abtrennen des Mitnahmeteils zur Folge hat; oder
iv) Befestigen des Sicherheitselements an der Vorrichtung, Platzieren eines Halteelements an der Vorrichtung, Befestigen des Halteelements an der Vorrichtung durch zumindest ein Befestigungselement mit einem Mitnahmeteil, der durch eine durchtrennbare Zone mit dem Rest des Befestigungselements verbunden ist, Anschrauben des Befestigungselements an die Vorrichtung, und anschließendes, am Ende des Einschraubens, zwangsweises Fortsetzen der Drehung auf solche Weise, dass eine Zerstörung der durchtrennbaren Zone und ein Abtrennen des Mitnahmeteils hervorgerufen werden; oder
v) Befestigen des Sicherheitselements an der Vorrichtung, Ändern der Form mit oder ohne Entfernung von Material des Sicherheitselements, um es nicht abmontierbar zu machen, vorzugsweise durch Zerstören von Profilen, die zur Montage dienten; oder
vi) Befestigen des Sicherheitselements an der Vorrichtung, Befestigen eines Halteelements des Sicherheitselements an der Vorrichtung und Ändern der Form, mit oder ohne Entfernung von Material, des Sicherheitselements auf solche Weise, dass das Halteelement nicht abmontierbar gemacht wird, ohne dass es seine Funktion zum Festhalten des Sicherheitselements verlieren würde; oder
vii) Befestigen des Sicherheitselements an der Vorrichtung, Befestigen eines Halteelements des Sicherheitselements mittels mindestens eines Befestigungselements an der Vorrichtung, und Ändern der Form, mit oder ohne Entfernung von Material, des Befestigungselements auf solche Weise, dass es nicht abmontierbar gemacht wird.
